# EUROPEAN PATENT APPLICATION

(11) **EP 2 891 965 A1**
(43) Date of publication of application: **08.07.2015**
(21) Application number: 14200704.6
(22) Date of filing: 31.12.2014
(51) Int. Cl.: G06F 3/0487

(54) **Stretchable display apparatus and method of controlling the same**

(30) Priority: 06.01.2014 KR 20140001308
(71) Applicant: Samsung Display Co., Ltd., Gyeonggi-Do (KR)
(72) Inventor: Yang, Sun A, Gyeonggi-do (KR)
(74) Representative: Mounteney, Simon James

(57) **Abstract**

A controlling method of a stretchable display apparatus includes displaying an image on a stretchable display panel of the stretchable display apparatus, sensing a stretching of the stretchable display panel to generate a sensing signal corresponding to the stretching of the stretchable display panel, acquiring stretching information about the stretching from the sensing signal, and controlling the image displayed on the stretchable display panel based on the stretching information.

## Description

### BACKGROUND

### 1. Field

The invention relates to a display apparatus. More particularly, the invention relates to a stretchable display apparatus.

### 2. Description of the Related Art

An electronic device, such as a smart phone, a digital camera, a notebook computer, a navigation system and a television set, for example, may include a display apparatus to display an image.

In general, a flat display panel, such as a liquid crystal display panel, an organic light emitting display panel, a plasma display panel and an electrophoretic display panel, for example, is widely used as the display panel due to thinness and light weight.

In recent years, a stretchable display apparatus has been developed. The stretchable display apparatus is applied to various fields such as information technology ("IT") products, clothes, paper media, etc., since the stretchable display apparatus has a thin thickness, light weight and infrangible strength, and stably displays an image while being stretched.

The invention seeks to provide a stretchable display apparatus with improved usability.

The invention also sets-out to provide a method of controlling the stretchable display apparatus.

Embodiments of the invention provide a method of controlling a stretchable display apparatus including displaying an image on a stretchable display panel of the stretchable display apparatus, sensing a stretching of the stretchable display panel to generate a sensing signal corresponding to the stretching of the stretchable display panel, acquiring stretching information about the stretching based on the sensing signal, and controlling the image displayed on the stretchable display panel based on the stretching information.

In an embodiment of the invention, the stretching information may include a stretching area of the stretchable display panel, and the controlling the image displayed on the stretchable display panel based on the stretching information may include using a control signal corresponding to the stretching area.

In an embodiment of the invention, the displaying the image on the stretchable display panel may include displaying one page of an electronic document, and the controlling the image displayed on the stretchable display panel based on the stretching information may further include changing the image from the one page of the electronic document to a previous page or a next page of the electronic document, based on the control signal.

In an embodiment of the invention, the stretching information may include a stretching direction of the stretchable display panel, and the controlling the image displayed on the stretchable display panel based on the stretching information may include using a control signal corresponding to the stretching direction.

In an embodiment of the invention, the displaying the image on the stretchable display panel may include displaying one page of an electronic document, and the controlling the image displayed on the stretchable display panel based on the stretching information may further include changing the image from the one page of the electronic document to a previous page or a next page of the electronic document, based on the control signal.

In an embodiment of the invention, the stretching information may include a value corresponding to a stretching force applied to the stretchable display panel, and the controlling the image displayed on the stretchable display panel based on the stretching information may include using a control signal corresponding to the stretching force.

In an embodiment of the invention, the displaying the image on the stretchable display panel may include displaying one page of an electronic document, and the controlling the image displayed on the stretchable display panel based on the stretching information may further include skipping a plurality of pages to change the image from the one page of the electronic document to another page of the electronic document when the value corresponding to the stretching force is greater than a predetermined reference value, and skipping one page to change the image from the one page of the electronic document to a previous page or a next page of the electronic document when the value corresponding to the stretching force is less than a predetermined reference value.

In an embodiment of the invention, the stretching information may include a stretching speed of the stretchable display panel, and the controlling the image displayed on the stretchable display panel based on the stretching information may include using a control signal corresponding to the stretching speed.

In an embodiment of the invention, the displaying the image on the stretchable display panel may include displaying one page of an electronic document, and the controlling the image displayed on the stretchable display panel based on the stretching information may further include determines a speed at which the image is changed from the one page of the electronic document to another page of the electronic document, based on the control signal.

Embodiments of the invention provide a stretchable display apparatus including a stretchable display panel which is stretchable to a predetermined direction and displays an image, a sensor which senses a stretching of the stretchable display panel to generate a sensing signal corresponding to the stretching of the stretchable display panel, and a controller which receives the sensing signal, acquires stretching information about the stretching of the stretchable display panel based on the sensing signal, and controls the image displayed on the stretchable display panel based on the stretching information.

In an embodiment of the invention, the stretching information may include at least one of a stretching area, a stretching direction, a size of stretching force and a stretching speed.

In an embodiment of the invention, the stretchable display panel displays one page of an electronic document, and the controller changes the image from the one page of the electronic document to another page of the electronic document using a control signal corresponding to the stretching information.

In an embodiment of the invention, the stretchable display panel may include a display area, on which the image is displayed, and a non-display area which surrounds the display area, and the sensor is disposed in the non-display area.

In an embodiment of the invention, the sensor may include a pressure sensor.

At least some of the above and other features of the invention are set-out in the claims.

In an embodiment of the invention, the sensor senses a variation of a coordinate of each portion of the stretchable display panel, which is caused by the stretching of the stretchable display panel.

According to embodiments of the invention described herein, the stretchable display apparatus senses the stretching of the stretchable display panel and controls the image displayed on the stretchable display panel based on a result of the sensing. Therefore, in such embodiments, a user may input various instructions to the stretchable display apparatus by stretching the stretchable display apparatus, such that the usability of the stretchable display apparatus may be improved.

### BRIEF DESCRIPTION OF THE DRAWINGS

The above and other features of embodiments of the invention will become readily apparent by reference to the following detailed description when considered in conjunction with the accompanying drawings, in which:
FIG. 1 is a block diagram showing an embodiment of a stretchable display apparatus according to of the invention;
FIG. 2 is a perspective view showing an embodiment of a stretchable display apparatus according to the invention;
FIG. 3 is a flowchart showing an embodiment of a control method of a stretchable display apparatus according to the invention;
FIG. 4 is a plan view showing a first area of an embodiment of a stretchable display apparatus, which is stretched out, according to the invention;
FIG. 5 is a plan view showing a third area of an embodiment of a stretchable display apparatus, which is stretched out, according to the invention;
FIG. 6 is a flowchart showing an alternative embodiment of a control method of a stretchable display apparatus, according to the invention; and
FIG. 7 is a flowchart showing another alternative embodiment of a control method of a stretchable display apparatus, according to the invention.

### DETAILED DESCRIPTION

The invention will be described more fully hereinafter with reference to the accompanying drawings, in which various embodiments are shown. The invention may, however, be embodied in many different forms, and should not be construed as limited to the embodiments set forth herein. Rather, these embodiments are provided so that this disclosure will be thorough and complete, and will fully convey the scope of the invention to those skilled in the art. Like reference numerals refer to like elements throughout.

It will be understood that when an element or layer is referred to as being "on", "connected to" or "coupled to" another element or layer, it can be directly on, connected or coupled to the other element or layer or intervening elements or layers may be present. In contrast, when an element is referred to as being "directly on," "directly connected to" or "directly coupled to" another element or layer, there are no intervening elements or layers present. Like numbers refer to like elements throughout. As used herein, the term "and/or" includes any and all combinations of one or more of the associated listed items.

It will be understood that, although the terms first, second, etc. may be used herein to describe various elements, components, regions, layers and/or sections, these elements, components, regions, layers and/or sections should not be limited by these terms. These terms are only used to distinguish one element, component, region, layer or section from another region, layer or section. Thus, a first element, component, region, layer or section discussed below could be termed a second element, component, region, layer or section without departing from the teachings of the invention.

Spatially relative terms, such as "beneath", "below", "lower", "above", "upper" and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" the other elements or features. Thus, the term "below", for example, can encompass both an orientation of above and below. The device may be otherwise oriented (rotated 90 degrees or at other orientations) and the spatially relative descriptors used herein interpreted accordingly.

"About" or "approximately" as used herein is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" can mean within one or more standard deviations, or within ± 30%, 20%, 10%, 5% of the stated value.

The terminology used herein is for the purpose of describing particular embodiments only and is not intended to be limiting of the invention. As used herein, the singular forms, "a", "an" and "the" are intended to include the plural forms as well, unless the context clearly indicates otherwise. It will be further understood that the terms "includes" and/or "including", when used in this specification, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Hereinafter, embodiments of the invention will be described in detail with reference to the accompanying drawings.

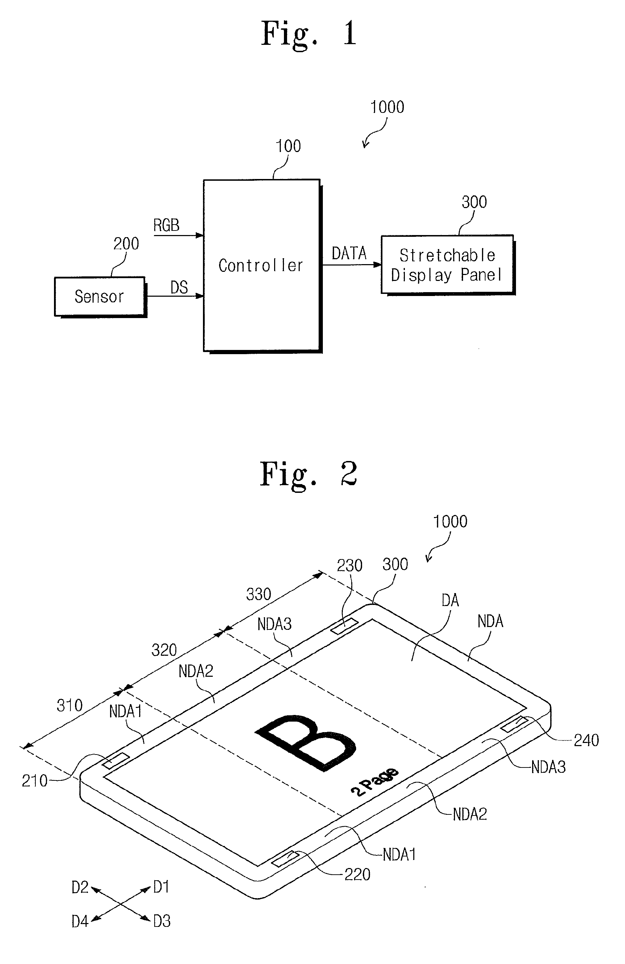

FIG. 1 is a block diagram showing an embodiment of a stretchable display apparatus 1000 according to the invention.

Referring to FIG. 1, an embodiment of the stretchable display apparatus 1000 includes a controller 100, a sensor 200 and a stretchable display panel 300.

The stretchable display panel 300 displays various information, e.g., text, video, photograph, two- or three-dimensional image, arbitrary visual information, etc. In one embodiment, for example, the stretchable display panel 300 may display one page of an electronic document. The stretchable display panel 300 is stretched by an external force.

The sensor 200 senses the stretching of the stretchable display panel 300 and generates a sensing signal DS corresponding to the stretching of the stretchable display panel.

The controller 100 drives the stretchable display panel 300, that is, controls an operation of the stretchable panel 300. The controller 100 receives image information RGB from an external device (not shown). The image information RGB may include information about the electronic document. The controller 100 converts the image information RGB to image data DATA corresponding to or appropriate to an operation mode of the stretchable display panel 300. The controller 100 applies the image data DATA to the stretchable display panel 300 to drive the stretchable display panel 300.

In an embodiment, the controller 100 receives the sensing signal DS from the sensor 200 to acquire stretch information about the stretch of the stretchable display panel 300 based on the sensing signal DS. The controller 100 controls the image using a predetermined control signal corresponding to the stretch information. In one embodiment, for example, when the stretchable display panel 300 is stretched, the controller 100 changes the image displayed on the stretchable display panel 300 from one page to another page of the electronic document. Hereinafter, the stretchable display panel 300 and the sensor 200 of an embodiment of the stretchable display 1000 will be described in detail with reference to FIG. 2.

FIG. 2 is a perspective view showing an embodiment of a stretchable display apparatus according to the invention.

Referring to FIG. 2, an embodiment of the stretchable display apparatus 1000 includes the stretchable display panel 300 and the sensor 200, e.g., a plurality of sensors 210, 220, 230 and 240, disposed in the stretchable display panel 300.

The stretchable display panel 300 may have various shapes. In one embodiment, for example, the stretchable display panel 300 has a rectangular plate shape with a pair of sides substantially in a first direction D1 and another pair of sides substantially in a second direction D2, which is substantially perpendicular to the first direction D1.

The stretchable display panel 300 includes a display area DA and a non-display area NDA. The display area DA and the non-display area NDA may have various shapes. In this embodiment, the display area DA is disposed at a center portion of the stretchable display panel 300 and has a rectangular shape, and the non-display area NDA is disposed to surround the display area DA. The stretchable display panel 300 displays the image through the display area DA and does not display the image through the non-display area NDA.

The stretchable display panel 300 may be stretched by an external force. The term of "stretchable" used herein means that a length or area of the stretchable display panel 300 is increased or expanded substantially parallel to the first and second directions D1 and D2 when viewed in a plan view. In one embodiment, for example, the stretchable display panel 300 may be stretched to the first direction D1 or the second direction D2, and thus the area of the stretchable display panel 300 increases when viewed in a plan view. In an embodiment, all or a portion of the stretchable display panel 300 may be stretched. When the stretchable display panel 300 is stretched, the area of the display area DA is also increased.

The stretchable display panel 300 includes a plastic material that may be stretchable. The stretchable material is extended or deformed by the external force and returns to its original shape when the external force is removed.

The stretchable display panel 300 may include a plurality of areas, e.g., a first area 310, a second area 320 and a third area 330. For convenience of description, an embodiment where the area of the stretchable display panel 300 is divided into the first, second and third areas 310, 320 and 330, and the first, second and third areas 310, 320 and 330 of the stretchable display panel 300 have substantially the same structure and function as each other as shown in FIG. 2 will be described. In such an embodiment, when viewed in a plan view, the first, second and third areas 310, 320 and 330 are sequentially arranged in the first direction D1. In such an embodiment, the second display area 320 is disposed between the first area 310 and the third area 330. In such an embodiment, the first, second and third areas 310, 320 and 330 partially overlap the display area DA and the non-display area NDA.

The non-display area NDA includes horizontal non-display areas extending in the first direction D1 and vertical non-display areas extending in the second direction D2. The vertical non-display areas are disposed at opposite sides of the display area DA in the first direction D1 and a fourth direction D4 opposite to the first direction D1. The horizontal non-display areas are disposed at opposite sides of the display area DA in the second direction D2 and a third direction D3 opposite to the second direction D2.

The horizontal non-display area includes respective pairs of first, second and third horizontal non-display areas NDA1, NDA2 and NDA3. The first horizontal non-display areas NDA1 each extend substantially in the first direction D1 in the first area 310 and are disposed at opposing sides of the display area DA in the second direction D2 and the third direction D3 opposite to the second direction D2. The second horizontal non-display areas NDA2 each extend substantially in the first direction D1 in the second area 320 and are disposed at opposing sides of the display area DA in the second direction D2 and the third direction D3 opposite to the second direction D2. The third horizontal non-display areas NDA3 each extend in the first direction D1 in the third area 330 and are disposed at the opposing sides of the display area DA in the second direction D2 and the third direction D3 opposite to the second direction D2.

In this embodiment, as shown in FIG. 2, the stretchable display panel 300 may include the plurality of sensors, e.g., first, second, third and fourth sensors 210, 220, 230 and 240.

The first and second sensors 210 and 220 are disposed in the first horizontal non-display areas NDA1, such that they are opposite each other and the display area DA is disposed between the first and second sensors 210 and 220 when viewed in a plan view.

The third and fourth sensors 230 and 240 are disposed in the third horizontal non-display areas NDA3, such that they are opposite each other and the display area DA is disposed between the third and fourth sensing devices 230 and 240 when viewed in a plan view.

The first to fourth sensors 210 and 240 sense the stretch of the stretchable display panel 300.

The sensors may each sense a coordinate of part of the stretchable display panel 300, and may include, e.g., a gyro sensor, a gravity acceleration sensor, etc. Where the senor senses the coordinates and a variation in the coordinate of each part of the stretchable display panel 300 while the stretchable display panel 300 is stretched, the stretch of the stretchable display panel 300 is sensed by the sensor.

In one embodiment, each of the first to fourth sensors 210 to 240 may include a pressure sensor. Therefore, in such an embodiment, the first to fourth sensors 210 to 240 sense the variation in pressure occurring in the stretchable display panel 300 while the stretchable display panel 300 is stretched.

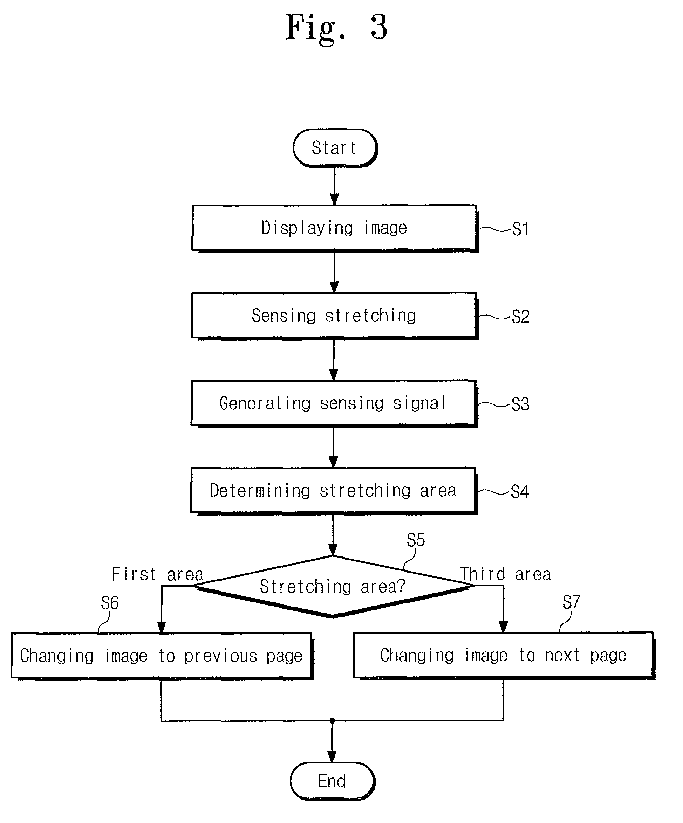

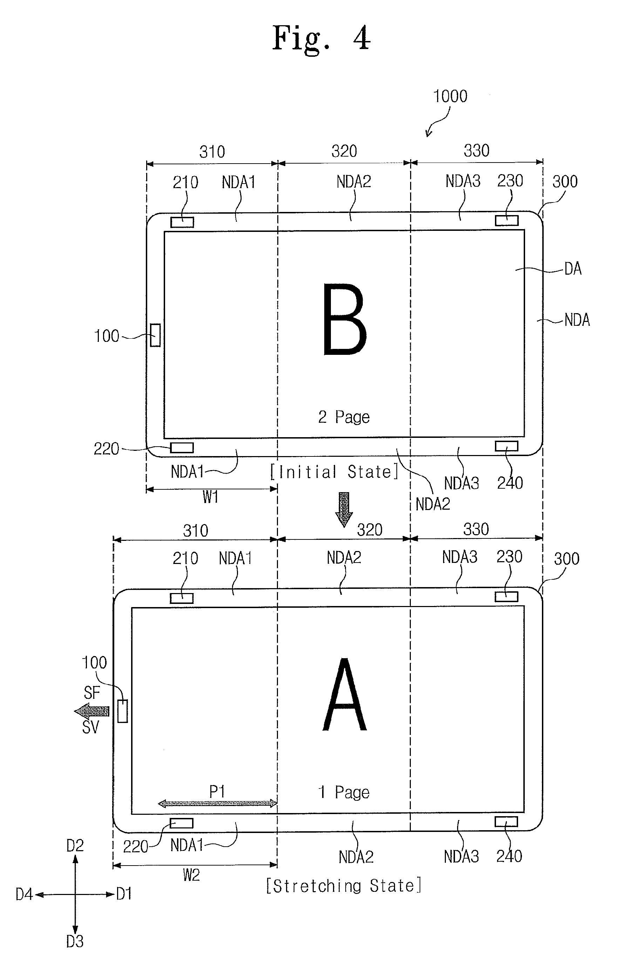

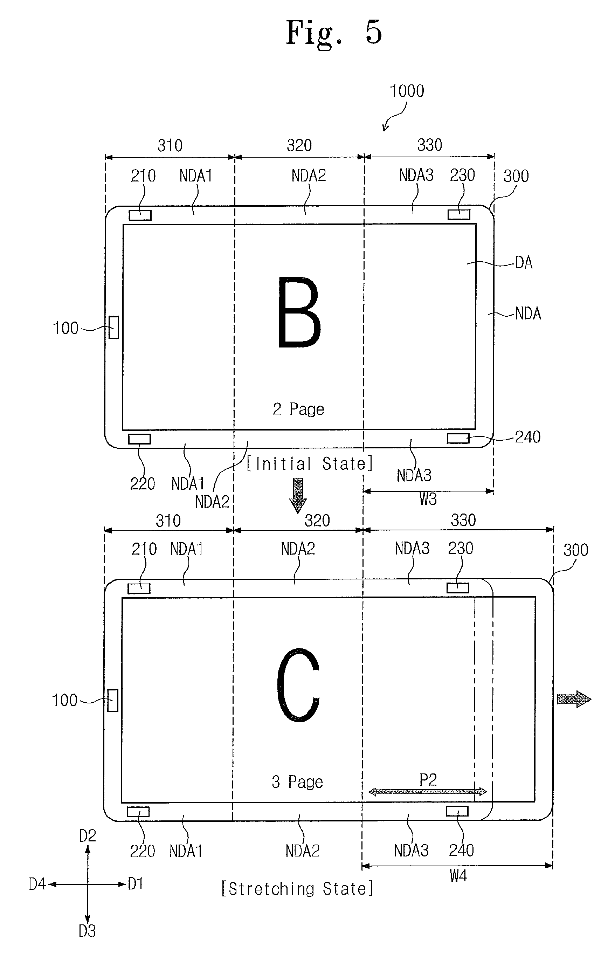

FIG. 3 is a flowchart showing an embodiment of a control method of a stretchable display apparatus, according to the invention, FIG. 4 is a plan view showing the first area of an embodiment of a stretchable display apparatus, which is stretched out, according to the invention, and FIG. 5 is a plan view showing the third area of an embodiment of a stretchable display apparatus, which is stretched out, according to the invention.

Referring to FIGS. 3 and 4, an embodiment of the control method of the stretchable display panel includes displaying an image, e.g., one page of an electronic document (S1), sensing a stretch in the stretchable display panel (S2), generating a sensing signal (S3), recognizing the stretching area (S4), checking the stretching area (S5), and changing the image to a previous page of the electronic document (S6) or to a next page of the electronic document (S7), that is, changing the image displayed there from the image of the one page to an image of the previous page or the next page.

As shown in FIG. 4, the stretchable display panel 300 displays the image (S1). In an embodiment, the image may be an image of one page of the electronic document.

The stretchable display panel 300 may be partially stretched by the external force. In one embodiment, for example, when the user stretches only the first area 310, the first area 310 is stretched, but the second and third areas 320 and 330 are not stretched. In such an embodiment, the first area 310 has a first width W1 in the first direction D1 before the first area 310 is stretched, i.e., in an initial state. When the first area 310 is stretched by the user, the first area 310 has a second width W2 greater than the first width W1. Accordingly, the display area DA and the first horizontal non-display area NDA1, which are disposed in the first area 310, are stretched.

When the first horizontal non-display area NDA1 is stretched, the pressure corresponding to the stretch of the first horizontal non-display area NDA1 occurs in the first horizontal non-display area NDA1. A first tensile force P1 therefore occurs in the first and fourth directions D1 and D4 in the first horizontal display area NDA1. The first and second sensors 210 and 220 sense the stretch of the first horizontal non-display area NDA1 based on the first tensile force P1 (S2). In such an embodiment, when the first area 310 is stretched, the third area 330 is not stretched, such that the tensile force does not occur in the third horizontal non-display area NDA3. Thus, the tensile force is not sensed by the third and fourth sensor 230 and 240.

Each of the first and second sensors 210 and 220 generates the sensing signal corresponding to the first tensile force P1 (S3). The third and fourth sensors 230 and 240 do not generate the sensing signal since the tensile force does not occur in the third area 330.

In such an embodiment, the controller 100 may be disposed in the non-display area NDA. The controller 100 is electrically connected to the first to fourth sensors 210 to 240. The controller 100 receives the sensing signal from the first and second sensors 210 and 220.

The controller 100 acquires the stretching information from the sensing signal. The stretching information includes various information about the stretch of the stretchable display panel 300. In one embodiment, for example, the stretching information may be the stretched area, the stretched direction, the force applied to the stretched area, or the stretched speed.

In this embodiment, the controller 100 determines the stretched area based on the sensing signal (S4). When the controller 100 receives the sensing signals from the first and second sensors 210 and 220 and does not receive the sensing signals from the third and fourth sensors 230 and 240, the controller 100 determines that the first area 310 is stretched based on the sensing signal.

The controller 100 determines that the first area 310 is stretched (S5) based on the sensing signal, and controls the image. For example, when the first area 310 is stretched, the controller 100 generates a first control signal. The controller 100 may change the image displayed on the stretchable display panel 300 from the one page to the previous page using the first control signal (S6).

Hereinafter, the operation of an embodiment of the stretchable display apparatus 1000 will be described in detail with reference to FIGS. 3 and 5 when the third area 330 is stretched.

As shown in FIG. 5, the third area 330 may be stretched by an external force, but the first and second areas 310 and 320 are not stretched when the third area 330 is stretched. In this embodiment, the third area 330 has a third width W3 in the first direction D1 at the initial state. When the third area 330 is stretched by the external force by the user, the third area 330 has a fourth width W4 greater than the third width W3. Accordingly, the display area DA and the third horizontal non-display area NDA3, which are disposed in the third area 330, are stretched.

When the third horizontal non-display area NDA3 is stretched, a second tensile force P2 occurs in the first and fourth directions D1 and D4 in the third horizontal display area NDA3. The third and fourth sensors 230 and 240 sense the second tensile force P2 (S2). When the third area 330 is stretched, the first area 310 is not stretched, such that the tensile force does not occur in the first horizontal non-display area NDA1. Thus, the tensile force is not sensed by the first and second sensor 210 and 220.

Each of the third and fourth sensors 230 and 240 generates the sensing signal corresponding to the second tensile force P2 (S3). The first and second sensors 210 and 220 do not generate the sensing signal since the tensile force does not occur in the first area 330.

The controller 100 receives the sensing signal from the third and fourth sensors 230 and 240. The controller 100 determines the stretched area from the sensing signal (S4). Since the controller 100 receives the sensing signals from the third and fourth sensors 230 and 240 and does not receive the sensing signals from the first and second sensors 210 and 220, the controller 100 determines that the third area 330 is stretched based on the sensing signal.

The controller 100 determines that the third area 330 is stretched (S5) and controls the image. In this embodiment, for example, when the third area 330 is stretched, the controller 100 generates a second control signal. The controller 100 may change the image displayed on the stretchable display panel 300 from the one page to the next page using the second control signal (S7).

As described above, an embodiment of the stretchable display apparatus 1000 senses that which area is stretched based on the sensing signals from the first to fourth sensors 210 to 240. Accordingly, the image displayed on the stretchable display panel 400 may be controlled by the controller 100. As a result, the user may input a predetermined instruction to the stretchable display apparatus 1000 by stretching the portion of the stretchable display apparatus 1000, such that the usability of the stretchable display apparatus 100 may be improved.

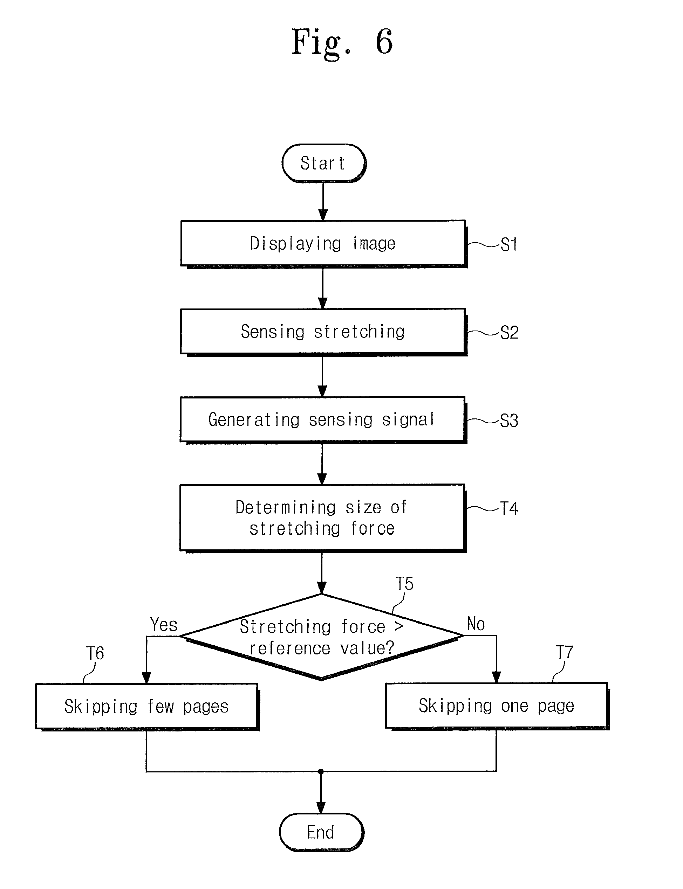

FIG. 6 is a flowchart showing an alternative embodiment of a control method of a stretchable display apparatus, according to the invention.

Hereinafter, an embodiment of the control method of the stretchable apparatus, according to the invention, will be described in detail with reference to FIGS. 4 and 6. In this embodiment, the control method of stretchable display apparatus includes displaying the image (S1), sensing the stretch (S2), generating the sensing signal (S3), determining a size of the force applied to the stretched area (T4), checking the stretching area based on the size of the force (T5), skipping a plurality of pages, e.g., a few pages, of an electronic document (T6) from a page of the electronic document being displayed on the stretchable display apparatus, and changing the image form the page to another page of the electronic document (T7).

In this embodiment, the displaying of the image (S1), the sensing of the stretch (S2), the generating of the sensing signal (S3) are substantially the same as those shown in FIG. 3, and thus any repetitive detailed descriptions thereof will be omitted.

Referring to FIG. 4, the first horizontal non-display area NDA1 may be stretched by a force of a predetermined magnitude or value. Herein, the force used to stretch the first horizontal non-display area NDA1 may be referred to as a stretching force SF.

In this embodiment, the controller 100 acquires information on the stretching force SF from the sensing signals (T4).

The controller 100 determines whether the stretching force SF is greater than a reference value (T5) and controls the image based on the checked result. In such an embodiment, when the stretching force SF is greater than the reference value, the controller 100 generates a first control signal. The controller 100 skips a plurality of pages, e.g., a few pages, from the page of the electronic document displayed on the stretchable display panel 300 using the first control signal to display another page (T6).

In such an embodiment, when the stretching force SF is less than the reference value, the controller 100 generates a second control signal. The controller 100 skips one page from the page of the electronic document displayed on the stretchable display panel 300 using the second control signal to display another page of the electronic document (T7).

As described above, in this embodiment, the stretchable display apparatus 1000 senses the stretching force SF and controls the image displayed on the stretchable display panel 300 using a control signal corresponding to the stretching force SF. As a result, the user may input predetermined instructions to the stretchable display apparatus 1000 by changing the size of the force used to stretch the stretchable display apparatus 1000, such that the usability of the stretchable display apparatus 100 may be improved.

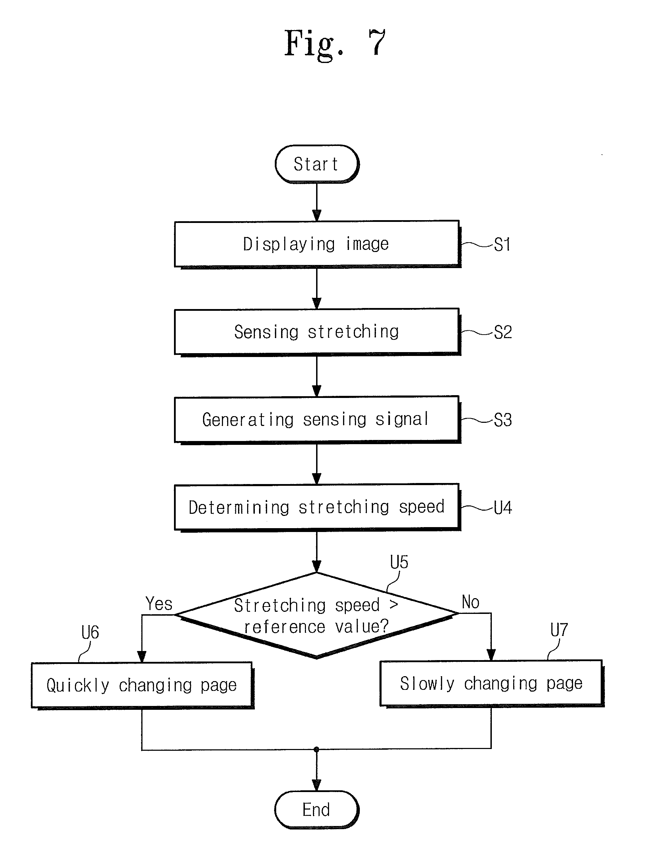

FIG. 7 is a flowchart showing another alternative embodiment of a control method of a stretchable display apparatus, according to the invention.

Hereinafter, an embodiment of the control method of the stretchable apparatus, according to the invention, will be described in detail with reference to FIGS. 4 and 7. In this embodiment, the control method of stretchable display apparatus includes displaying the image (S1), sensing the stretch (S2), generating the sensing signal (S3), determining a stretching speed of the stretched area (U4), checking the stretching area based on the stretching speed (U5), quickly changing pages of the electronic document (U6), and slowly changing the pages of the electronic document (U7).

In this embodiment, the displaying of the image (S1), the sensing of the stretch (S2), the generating of the sensing signal (S3) are the same as those shown in FIG. 3, and thus any repetitive detailed descriptions thereof will be omitted.

Referring to FIG. 4, the first horizontal non-display area NDA1 may be stretched with a predetermined speed. Herein, the predetermined speed when the first horizontal non-display area NDA1 is stretching may be referred to as a stretching speed SV.

In this embodiment, the controller 100 acquires information on the stretching speed SV from the sensing signals (U4).

The controller 100 determines whether the stretching speed SV is greater than a reference value (U5) and controls the image based on the checked result. When the stretching speed SV is greater than the reference value, the controller 100 generates a first control signal. The controller 100 quickly changes the image display on the stretchable display panel 300 from the one page to another page of the electronic document using the first control signal (U6).

In such an embodiment, when the stretching speed SV is less than the reference value, the controller 100 generates a second control signal. The controller 100 slowly changes the image displayed on the stretchable display panel 300 from the one page to another page of the electronic document using the second control signal (U7).

As described above, in this embodiment of the invention, the stretchable display apparatus 1000 senses the stretching speed SV and controls the image displayed on the stretchable display panel 300 based on the stretching speed SV. As a result, the user may input predetermined instructions to the stretchable display apparatus 1000 by changing the stretching speed needed to stretch the stretchable display apparatus 1000, such that the usability of the stretchable display apparatus 100 may be improved.

In the embodiments of the invention described above, the stretchable display apparatus 100 may be stretched to the first and fourth directions D1 and D4, but the invention is not limited thereto or thereby. In one embodiment, for example, the stretchable display apparatus 1000 may be stretched to the second and third directions D2 and D3. In such an embodiment, the first to fourth sensors 210 to 240 senses the variation in pressure occurring in the stretchable display panel when the stretchable display panel is stretched to the second and third directions D2 and D3, and outputs the sensing signals to the controller 100. The controller 100 determines that the stretchable display panel is stretched to the second and third directions D2 and D3 based on the sensing signals and controls the image displayed on the stretchable display panel 300. Consequently, the stretchable display apparatus 1000 may check the directions in which the stretchable display panel 300 is stretched and controls the image displayed on the stretchable display panel 300 based on the stretched direction of the stretchable display panel 300.

Furthermore, features of the above embodiments may be combined, that is to say the sensors may be adapted to recognize stretching direction, speed and amount, all in a single embodiment, for example.

Although certain embodiments of the invention have been described, it is understood that the invention should not be limited to these embodiments but various changes and modifications can be made by one ordinary skilled in the art within the scope of the invention as hereinafter claimed.

## Claims

1. A method of controlling a stretchable display apparatus, the method comprising:
displaying an image on a stretchable display panel of the stretchable display apparatus;
sensing a stretching of the stretchable display panel to generate a sensing signal corresponding to the stretching of the stretchable display panel;
acquiring stretching information about the stretching based on the sensing signal; and
controlling the image displayed on the stretchable display panel based on the stretching information.

2. A method according to claim 1, wherein
the stretching information comprises a stretching area of the stretchable display panel, and
the controlling the image displayed on the stretchable display panel based on the stretching information comprises using a control signal corresponding to the stretching area.

3. A method according to claim 2, wherein
the displaying the image on the stretchable display panel comprises displaying one page of an electronic document, and
the controlling the image displayed on the stretchable display panel based on the stretching information further comprises changing the image from the one page of the electronic document to a previous page or a subsequent page of the electronic document, based on the control signal.

4. A method according to any preceding claim, wherein
the stretching information comprises a stretching direction of the stretchable display panel, and
the controlling the image displayed on the stretchable display panel based on the stretching information comprises using a control signal corresponding to the stretching direction.

5. A method according to any preceding claim, wherein
the stretching information comprises a value corresponding to a stretching force applied to the stretchable display panel, and
the controlling the image displayed on the stretchable display panel based on the stretching information comprises using a control signal corresponding to the stretching force.

6. A method according to claim 5 when dependent upon claim 4, wherein
the controlling the image displayed on the stretchable display panel based on the stretching information further comprises:
skipping a plurality of pages to change the image from the one page of the electronic document to another page of the electronic document when the value corresponding to the stretching force is greater than a predetermined reference value; and
skipping one page to change the image from the one page of the electronic document to a previous page or a next page of the electronic document when the value corresponding to the stretching force is less than the predetermined reference value.

7. A method according to any preceding claim, wherein
the stretching information comprises a stretching speed of the stretching of the stretchable display panel, and
the controlling the image displayed on the stretchable display panel based on the stretching information comprises using a control signal corresponding to the stretching speed.

8. A method according to claim 7 when dependent from claim 4, wherein
the displaying the image on the stretchable display panel comprises displaying one page of an electronic document, and
the controlling the image displayed on the stretchable display panel based on the stretching information further comprises determining a speed at which the image is changed from the one page of the electronic document to another page of the electronic document, based on the control signal.

9. A stretchable display apparatus comprising:
a stretchable display panel which is stretchable in a predetermined direction and displays an image;
a sensor adapted to sense a stretching of the stretchable display panel to generate a sensing signal corresponding to the stretching of the stretchable display panel; and
a controller adapted to receive the sensing signal, acquire stretching information about the stretching of the stretchable display panel based on the sensing signal, and control the image displayed on the stretchable display panel based on the stretching information.

10. A stretchable display apparatus according to claim 9, wherein the stretching information comprises at least one of a stretching area, a stretching direction, a value of stretching force and a stretching speed.

11. A stretchable display apparatus according to claim 10, wherein
the stretchable display panel is adapted to display one page of an electronic document, and
the controller is adapted to change the image from the one page of the electronic document to another page of the electronic document using a control signal corresponding to the stretching information.

12. A stretchable display apparatus according to one of claims 9 to 11, wherein the stretchable display panel comprises:
a display area, on which the image is displayed; and
a non-display area which surrounds the display area,
wherein the sensor is disposed in the non-display area.

13. A stretchable display apparatus according to one of claims 9 to 12, wherein the sensor comprises a pressure sensor.

14. A stretchable display apparatus according to one of claims 9 to 13, wherein the sensor is configured to sense a variation of a coordinate of a portion of the stretchable display panel, which is caused by the stretching of the stretchable display panel.
